Europäisches Patentamt

European Patent Office

Office européen des brevets

(11) Publication number: **0 075 185**
A2

# EUROPEAN PATENT APPLICATION

(21) Application number: **82108239.3**

(22) Date of filing: **08.09.82**

(51) Int. Cl.³: **B 23 Q 11/00**

(30) Priority: **19.09.81 JP 148023/81**

(43) Date of publication of application: **30.03.83**
**Bulletin 83/13**

(84) Designated Contracting States: **DE FR GB IT**

(71) Applicant: **Ishihara, Masamitsu, 628 Hirai Kannami-cho,**
**Tagata-gun Shizuoka-ken (JP)**

(72) Inventor: **Ishihara, Masamitsu, 628 Hirai Kannami-cho,**
**Tagata-gun Shizuoka-ken (JP)**

(74) Representative: **Rüger, Rudolf, Dr.-Ing.,**
**Webergasse 3 Postfach 348, D-7300 Esslingen/Neckar**
**(DE)**

(54) **Dust evacuation for a hollow drill.**

(57) A drilling tool (22) rotated by a driving source is of cylindrical shape provided with a chamber (23) inside and intended to drill a ring-shaped hole (42) in a surface to be drilled. A pumping means (34) is arranged to suck air from the lower end of the drilling tool into the chamber (23) through the ring-shaped hole (42) which is being drilled and to discharged air outside the chamber (23). The drilling tool (22) has a blade which is so shaped as to provide outer und inner clearances in the ring-shaped hole (42) to suck air as a high speed air flow into the chamber (23) through the ring-shaped hole (42). The chamber (23) of the drilling tool has a large cross-sectional area relative to that of the outer and inner clearances in the ring-shaped hole (42) so as to quickly slow down the air sucked in the chamber (23).

- 1 -

Drilling method and device for the same

The present invention relates to method and device for drilling concrete, asphalt, tiles, blocks, Hume pipes, ceramic pipes and the like.

It can not be avoided that dust and drilling chips are generated when concrete and the like are drilled. Dust must be treated without being discharged into the air to prevent air pollution. Drilling chips must be removed quickly from the drilling hole because drilling operation is hindered if these chips are left in the hole.

Drilling machines provided with a drilling tools for drilling holes are well known. Various drilling machines of this type are provided with dust collecting means for disposing of dust, drilling chips and the like. These drilling machines can be classified into two types depending upon whether or not they have a dust collecting hood.

The first type of drilling machine includes no dust collecting hood but the drilling tool is provided with an air path extending in the axial direction thereof and has an acute foremost end and a pumping means communicating with the air path in the drilling tool. The air path and pumping means form the dust collecting means. With this drilling machine, dust, drilling chips and the like are pumped out with air through the air path at the time of drilling operation. Since the sectional area of the air path is smaller than that of the circular hole to be drilled, the speed of the air flow in the circular hole is less than that in the air path, so that a large pumping force is not created in the circular hole. Particularly because the foremost end of the drilling tool is acute, a larger clearance is created at the lower portion of the circular hole and a large pumping force is therefore not created at the lower portion of the circular hole where dust and the like are collected. Therefore, even if the vacuum force of the pumping means is made large, the pumping of drilling chips and the like is difficult and the sizes of the chips to be pumped out are limited by the size of the air path. In practice only dust can be pumped out and removed and almost all of the chips and the like can not. Therefore, drilling must be stopped to manually remove chips from the hole, thus decreasing drilling efficiency. In addition, the drilling tool must be provided with an air path and the presence of this air path weakens the strength of the drilling tool. If the size of the air path in the drilling tool is increased and the vacuum force of the pumping means is also increased to pump out and remove all the dust and chips from the circular hole, it is necessary to prevent the filters and the air path arranged in the drilling tool from becoming clogged. Freedom in designing the air path is thus limited and the use of the pumping means is also limited in that its flexible hose must be used without being bent to prevent it from clogging.

The second type of drilling machine includes a drilling tool having an acute foremost end, a dust collecting hood for closing a part of the drilling tool, and a pumping means communicated with the inside of the dust collecting hood. The dust collecting hood and pumping means form the dust collecting means. With this drilling machine, air inside the dust collecting hood is pumped out by the pumping means along with dust and drilling chips generated during drilling, and is discharged outside the dust collecting hood. In this case, air is supplied inside the dust collecting hood through an opening thereof. The volume of the dust collecting hood is very large, making it difficult to obtain a high air flow speed in the dust collecting hood. In addition, when the circular hole drilled has a large sectional area and a large clearance is formed at the lower portion of the circular hole, thus making it impossible to obtain a high air flow speed in the circular hole. As a result, a large pumping force can not be achieved, making it difficult to pump out a sufficient amount of dust and chips and to discharge it outside the circular hole, and high drilling speed can not be obtained. If an air path is formed in the drilling tool and air under pressure is supplied through this air path, a considerable amount of dust and chips will be blown out of the circular hole. However, an air path must be formed in the drilling tool, weakening the drilling tool similar to the first type of drilling machine. Even if the vacuum force of the pumping means is made so large as to remove all the dust and chips, the clogging problem will be left unsolved.

In the above-described drilling machines, the drilling tool usually has a blade, such as a bit made of cemented carbide with excellent heat resistance, making it unnecessary to pay attention to the cooling of the drilling tool. Except when compressed air is supplied, the speed of the air flow in the circular hole is actually low during drilling and there is little cooling of the drilling tool.

Other types of driling machines provided with a cylindrical drilling tool such as a core bit, or having a diamond bit attached to its lower end, and intended to drill a ring-shaped hole are also well known. The drilling machine of this type is remarkably different from those already described above. It includes a drilling tool that generates dust but not chips. A drilling tool with a diamond bit is inferior in heat resistance to a tool with a cemented carbide and needs to be cooled accordingly. With this type of drilling machine, water is supplied to the drilling tool during drilling to prevent dust from polluting the air. This water supply also achieves the effect of cooling the drilling tool. This water supply, however, always immerses the working site with water and therefore makes it necessary to pay attention to water draining. When this drainage is not sufficient, other works on the working site will be hindered the use of the drilling machine. Upward drilling and drilling in a high position are extremely difficult with this type of drilling machine. In addition, the need for supplying water to the drilling tool means that water supply arrangements such as water services and a water supply tank further limit the use of the drilling machine.

The present invention as claimed is intended to eliminate these drawbacks. It solves the problem of how to design a drilling method in which air flow is controlled to cool the drilling tool as well as to remove dust from the hole. In short, a ring-shaped hole is drilled by the drilling tool and a high-speed air flow is pumped into a chamber of the drilling tool through the ring-shaped hole and the lower end of the drilling tool. Dust is removed along with this air flow from the ring-shaped hole and the drill tool is cooled by this air flow. The high speed air flow containing dust is rapidly slowed down in the chamber. This slow-down of air flow enables most of dust contained in the air flow to fall by its weight onto a surface left undrilled in the chamber. Air is thereafter discharged outside the chamber.

The advantages offered by the present invention are that dust can be easily removed from the ring-shaped hole and most of dust is collected on the surface left undrilled in the chamber while only a part thereof is pumped up and collected, thus reducing the occurrence of clogging and preventing air pollution. Therefore the drilling tool can be sufficiently cooled by the high speed air flow and continuous drilling can be therefore achieved even using such drilling tools as diamond which is inferior in heat resistance. Thus the drilling speed is high and the use of drilling machine is not limited by a need for air cooling.

One way of carrying out the present invention will be described in detail below with reference to the drawings which illustrate only one specific embodiment, in which:

Fig. 1 is a side view, partly in cross section of a drilling machine according to the present invention;

Fig. 2 is a sectional view showing the drilling machine in operation;

Fig. 3 is a fragmentary sectional view of another embodiment of the present invention; and

Fig. 4 is a perspective view of a core bit.

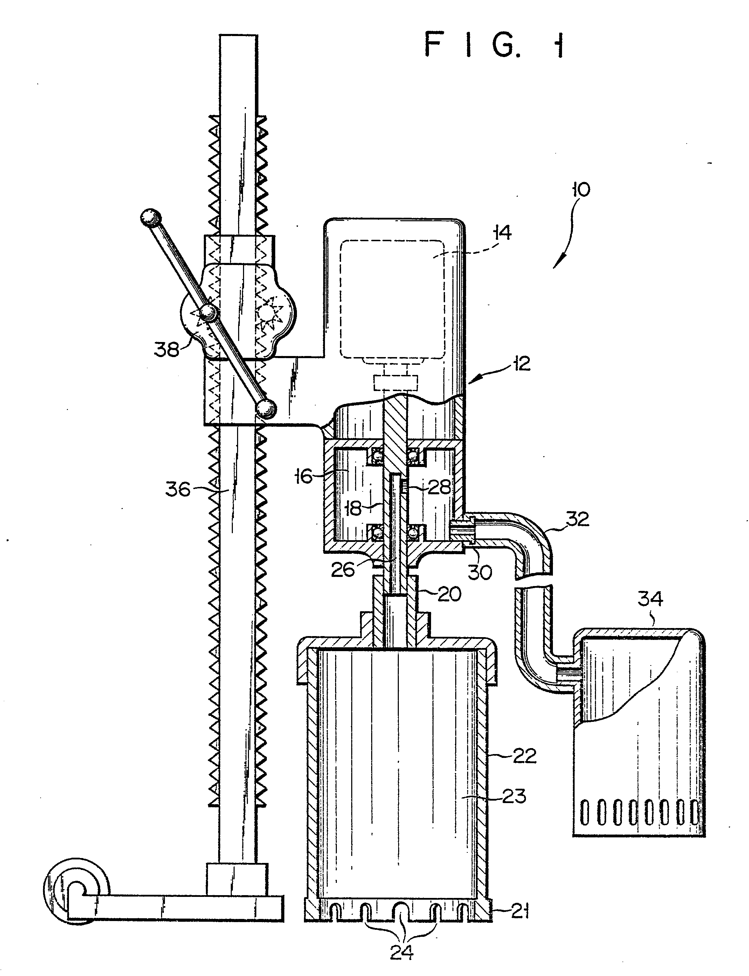

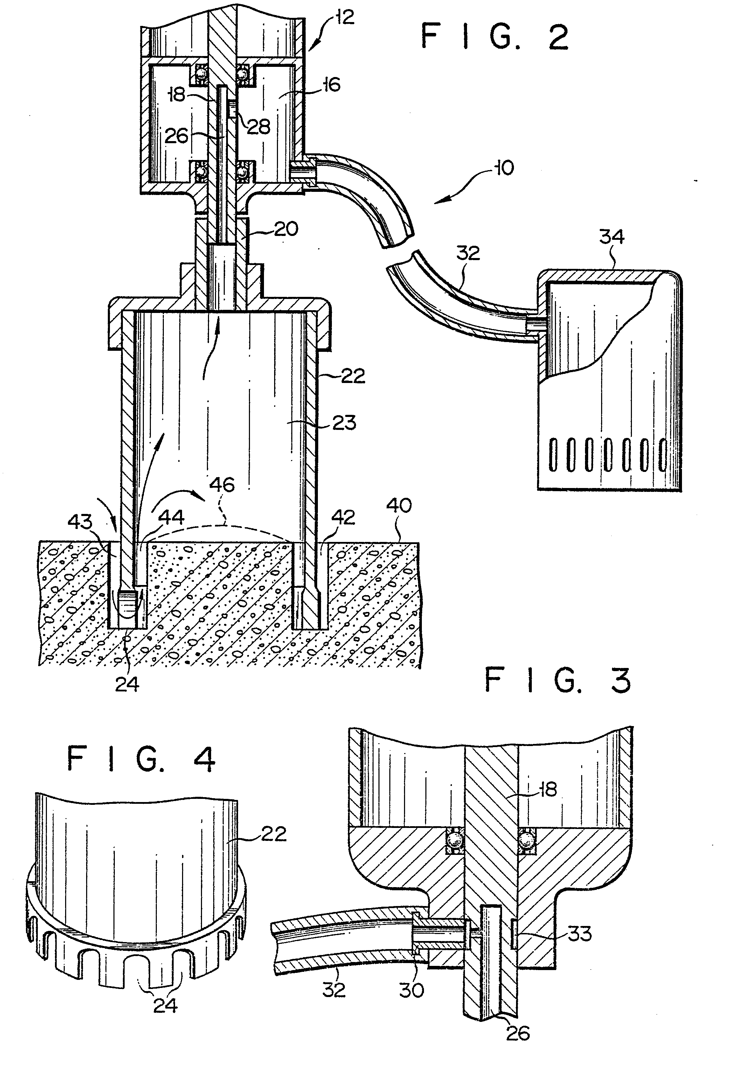

As shown in Fig. 1, a drilling machine 10 suitable for carrying out a drilling method of the present invention comprises a body 12 and a driving source such as a motor 14, for example, arranged in the body 12. The body 12 includes a chamber 16 at the lower portion thereof and a rotation shaft 18 is freely and rotatably supported by the chamber 16 and extends downward from the body 12, passing through the chamber 16. To the extending end of the rotation shaft 18 is attached a hollow connecting shaft 20, to which is detachably attached a drilling tool such a core bit 22. The core bit 22, connecting shaft 20 and rotation shaft 18 are driven integrally with one another by the motor 14. The core bit 22 may be attached directly to the rotation shaft 18 without the connecting shaft 20. The core bit 22 is a hollow cylinder with a chamber 23 inside. A piece 21 of diamond which serves as a blade is attached to the lower end of the core bit 22. A blade made of cemented carbide may be attached thereto. The core bit 22 has a plurality of notches 24 separated by the same distance from one another along the lower end thereof, as shown in Fig. 4, and these notches 24 serve as air inlets, as will be described later. The core bit 22 is driven by the motor 14 to drill a ring-shaped hole in concrete and tiles.

As shown in Fig. 1, the rotation shaft 18 has an air passage 26 formed at the lower portion thereof and coaxial therewith, and this air passage 26 is communicated through the connecting shaft 20 with the chamber 23 in the core bit 22.

The rotation shaft 18 also has a traverse bore 28 through which the air passage 26 is communicated with the chamber 16. A nipple 30 is attached to the chamber 16, passing through the circumference thereof. To this nipple 30 is connected an end of a hose 32, whose other end is connected to a pumping means 34 located outside. The chamber 23 in the core bit 22 is thus communicated through the connecting shaft 20, air passage 26, chamber 16 and hose 32 with the pumping means 34. The body 12 is supported, freely movable up and down, by a stand 36, and when the body is lowered, the ring-shaped hole is drilled by the core bit 22. And when the body 12 is adjusted in height, the drilling depth of the core bit 22 can be varied. The stand 36 for supporting the body 12 employs a rack and pinion mechanism 38 in this case but may employ other mechanisms and the body may be moved up and down automatically. The stand 36 may be omitted when a small-sized drilling machine is used.

A drilling method achieved by the drilling machine 10 including an arrangement as described above will be now described. As shown in Fig. 2, the lower end of the core bit 22 is contacted with a surface 40 to be drilled, lowering the body 12, and the core bit 22 is driven at the same time by the motor 14 to drill the surface 40. The pumping means 34 is also operated at the same time to forcedly pump air into the chamber 23 of the core bit 22. Air flow forcedly caused by the pumping means 34 attracts air in the chamber 16 of the body 12 through the hose 32, and when air pressure in the chamber 16 is lowered, air in the chamber 23 of the core bit is pumped through the traverse bore 28 and air passage 26 in the rotation shaft 18. The lowering of air pressure in the chamber 23 serves to suck in outside air through the ring-shaped hole 42 drilled by the core bit 22 and through notches 24 of the core bit.

It is well known from the continuity equation in hydrodynamics that the section area of air passage is inversely proportional to flow speed and it is also well known from Bernoulli's theorem that pressure lowers and attracting force increases as flow speed becomes higher.

The ring-shaped hole 42 drilled by the core bit 22 is theoretically equal to the blade thickness t of lower end of the core bit. In practice, however, that the ring-shaped hole 42 is drilled $\alpha$ (about 10 %) wider both outward and inward in the radial direction thereof than the blade thickness t. Available core bits have outer diameters of 50 mm (2"), 100 mm (4"), 200 mm (8"), 250 mm (10") and 300 mm (12"), body thickness ranging from 1.5 mm to 4 mm, and blade thickness ranging from 2 mm to 7 mm. When the blade thickness ranges from 2 mm to 7 mm, $\alpha$ ranges from 0.2 to 0.7 and is extremely small. The ring-shaped hole 42 is divided into outer and inner sides with the core bit 22 interposed as a boundary wall between them. Air pumped by the pumping means 34 is sucked from the outer side of the ring-shaped hole 42 and forcedly flows along the outer circumference of the core bit 22, cooling this outer circumference. Thereafter, this air flow enters to the inner side of the ring-shaped hole 42 through the notches 24 of the core bit 22 and then into the chamber 23, flowing along the inner circumference of the core bit, cooling it. The largest gaps g on the outer and inner sides of the ring-shaped hole 42, that is, the outer and inner clearances have the following values (mm):

| | | |
|---|---|---|
| Body thickness of core bit | 1.5 | - 4 |
| Blade thickness of core bit | 2 | - 7 |
| Difference | 0.5 | - 3 |
| Divided to both sides | 0.25 | - 1.5 |
| α | 0.2 | - 0.7 |
| g | 0.45 | - 2.2 |

As apparent from the above, the outer and inner clearances 43 and 44 are extremely small. Therefore, the air flow speed becomes extremely high in the outer and inner clearances 43 and 44 of the ring-shaped hole 42, thus this air flow has a high cooling effect. The outer and inner circumferences of the core bit 22 can be thus cooled sufficiently to prevent the core bit from becoming hot during drilling operation.

Since its flow speed is high, the air flow has a large attracting force in the outer and inner clearances 43 and 44 of the ring-shaped hole 42, enabling dust caused under drilling operation to be reliably attracted by the air flow into the chamber 23. No drilling chips but only dust is generated during drilling using the cylindrical drilling tool such as a core bit. Dust can be almost completely pumped out and collected leaving nothing in the ring-shaped hole. This obviates the need to stop the drilling operation and remove dust and chips from the hole. Therefore, continuous drilling is possible resulting in high drilling efficiency in addition to the cooling effect attained.

When building concrete with standard hardness was drilled without water supply, rotating a core bit having an outer diamenter of 200 mm at the speed of 500 rpm, the drilling depth was limited to 10 mm despite the core bit was often drawn from the ring-shaped hole to prevent frictional heat damage. When the concret was drilled a further 10 mm after the first 10 mm, the core bit was damaged by frictional heat and became unusable despite all dust was removed from the hole and core bit was fully cooled every time the core bit was drawn from the hole. When building concrete was drilled, rotating a core bit of the same type at the same speed of 500 rpm and supplying water thus cooling the core bit and removing the dust from the hole, the drilling continued at about 20-50 mm/min. In this case, the core bit lasted much longer than in the case where no water was supplied to cool the core bit and remove the dust. In contrast, the present invention attained high dust collecting and cooling effects thanks to the high speed air flow. A drilling speed approaching to about 90 % of the case where water was supplied, that is, ranging from 18 to 45 mm/min was obtained, and the life of the drilling tool was increased to the same length as that when water was supplied.

The core bit is 50 mm, 100 mm and more in outer diameter and ranges from 1.5 to 4 mm in body thickness. The cross-sectional area of the chamber 23 becomes large accordingly. When the core bit is 50 mm in outer diameter and 1.5 mm in body thickness, and when it is 300 mm in outer diameter and 4 mm in body thickness, for example, the cross-sectional areas A1 and A2 are as shown below:

$$A1 = \frac{\pi}{4}d2 = \frac{\pi}{4}(50 - 1.5 \times 2)^2 \fallingdotseq 1730$$

$$A2 = \frac{\pi}{4}d2 = \frac{\pi}{4}(300 - 4 \times 2)^2 \fallingdotseq 66900$$

On the other hand, the cross-sectional areas $a_0$ and $a_i$ of outer and inner clearances 43 and 44 of the ring-shaped hole 42 are as shown below:

(1) when the outer diameter of the core bit is 50 mm and the maximum value of the gap g is 2.2 mm,

$$a_0 = \frac{\pi}{4}[(50 + 2.2 \times 2)^2 - 50^2] \fallingdotseq 360$$

$$a_i = \frac{\pi}{4}[50^2 - (50 - 2.2 \times 2)^2] \doteqdot 330$$

The gap g takes its maximum value when the diameter of the core bit is large but takes no maximm but a substantially small value when the outer diameter of the core bit is 50 mm.

(2) When the outer diameter of the core bit is 300 mm and the maximum value of the gap g is 2.2 mm,

$$a_0 = \frac{\pi}{4}[(50 + 2.2 \times 2)^2 - 300^2] \doteqdot 2090$$

$$a_i = \frac{\pi}{4}[300^2 - (300 - 2.2 \times 2)^2] \doteqdot 2060$$

Therefore, ratio n between the cross-sectional area A of the chamber 23 and the cross-sectional area a of clearances of the ring-shaped hole 42 is as follows:

(1) When the outer diameter of the core bit is 50 mm,

$$n_0 = \frac{A_1}{a_0} = \frac{1730}{360} \doteqdot 4.8$$

$$n_1 = \frac{A_1}{a_i} = \frac{1730}{330} \doteqdot 5.2$$

(2) When the outer diameter of the core bit is 300 mm,

$$n_0 = \frac{A_2}{a_0} = \frac{66900}{2090} \doteqdot 32$$

$$n_i = \frac{A_2}{a_i} = \frac{66900}{2060} \doteqdot 32$$

As apparent from the above, the cross-sectional area of the chamber 23 becomes, even at its smallest, 4.8 times the cross-sectional area of clearances of the ring-shaped hole 42 and larger as the size of the core bit becomes larger (it is calculated that the ratio takes its smallest value 4.8 when the outer diameter of the core bit is 50 mm and the maximum value of the gap is 2.2 mm, but the practical gap is substantially small and it is a matter of course that this smallest value 4.8 is unpractical). As a result of the continuity equation in hydrodynamics, the speed of the air flow entering into the chamber 23 decreases quickly to 1/4.8. The air flow entering into the chamber 23 thus reduces quickly in attracting force and has no force to attract dust. Therefore, most of dust (about 90 % according to experiments) except extremely fine particles falls by its weight on the surface inside the chamber 23 and is collected there as shown by numeral 46 in Fig. 2. Extremely fine particles or about 10 % of dust are supplied from the chamber 23 to the pumping means 34 through the air passage 26, traverse bore 28, chamber 16 and hose 32 and collected there. According to the drilling method carried out by the drilling machine 10 as described above, the speed of air flow is quickly reduced allowing most of the dust to fall while a small amount of remaining dust whose particles are extremely fine are discharged from the chamber 23 and collected. This serves to prevent filters from becoming clogged. Clogging of an air path such as air passage 26 and hose 32 is also prevented so that the air path can be designed more freely and the use of the drilling machine is not limited. Dust collected on the surface inside the chamber 23 is removed after or during drilling operation, if necessary.

According to the drilling method of the present invention as described above, the ring-shaped hole is drilled by the drilling tool and air outside is sucked in as high speed air flow from the lower end of the drilling tool into the chamber thereof through the ring-shaped hole. Dust is removed along with this air flow from the ring-shaped hole and the drilling tool is cooled by this air flow. The high speed air flow containing dust is quickly slowed down in the chamber. Most of dust contained in the air flow falls due to the slow-down of air flow and is collected on the surface inside the chamber. Air is thereafter discharged outside the chamber. The drilling method using the high speed air flow enables dust to be easily removed from the ring-shaped hole. The drilling method also allows most of dust to be collected on the surface inside the chamber while only a small amount of remaining dust whose particles are extremely fine is discharged outside the chamber and collected, so that clogging of filters and air path can be prevented. In addition, the drilling tool can be sufficiently cooled by the high speed air flow. Therefore, continuous drilling operation can be carried out even when the drilling tool, such as diamond which is inferior in heat resistance, is employed, thus enabling high drilling speed to be achieved. Because of air cooling, the use of the drilling machine is not limited by the problem of water supply and drain, and upward drilling can be easily carried out.

The drilling machine suitable for carrying out the above-described drilling method includes a body, a rotation shaft supported freely and rotatably by the body and whose one end extends from the body, a driving source for driving the rotation shaft, and a cylindrical drilling tool attached to the extending end of the rotation shaft and rotated integral therewith to drill a ring-shaped hole in a surface to be drilled. The drilling tool has a chamber inside. The drilling machine further includes a pumping means for sucking air from the lower end of the drilling tool into the chamber thereof through the ring-shaped hole and discharging air outside the chamber. The drilling tool has a blade which is so shaped as to provide such outer and inner clearances in the ring-shaped hole that enable outside air to be sucked in as a high speed air flow into the chamber through the ring-shaped hole. In addition, the drilling tool has a chamber whose cross-sectional area is made larger compared with that of outer and inner clearances in the ring-shaped hole so as to quickly slow down the air sucked in the chamber. According to the drilling machine thus arranged, the above-described drilling method can be easily carried out at a high drilling speed and the use of the drilling machine can be broadened remarkably compared with conventional drilling machines.

The drilling tool may sometimes be lifted a little during drilled to provide a small clearance between the lower end of the drilling tool and the bottom of the ring-shaped hole so as to communicate outer and inner clearances with each other in the ring-shaped hole. It is preferable, however, that the drilling tool be provided with at least one air passing bore at the lower end thereof to always communicate outer and inner clearances with each other in the ring-shaped hole. When this air passing bore is formed as a notch extending upward from the lower end of the drilling tool, the blade of the drilling tool can be effectively cooled and dust can be smoothly removed from the ring-shaped hole without leaving any dust in the hole.

The above-described embodiment is only illustrative for the present invention and is not intended to limit the present invention. It should be understood that various changes and modifications can be made within the scope and spirit of the present invention. The pumping means, for example, has been arranged outside the body but may be incorporated into the body. As shown in Fig. 3, a ring-shaped groove 33 may be formed around the rotation shaft 18, instead of the chamber 16, to communicate the air passage with the pumping means through this ring-shaped groove 33, nipple 30 and hose 32. Attracting force can be increased in this case because the chamber is excluded. Although the body has been supported by the stand, the drilling machine may be made portable without the stand.

Claims:

1. A drilling method for drilling a hole in a surface by means of a drilling tool and sucking dust and the like in the hole by a pumping means communicated with an air passage in the drilling tool, characterized in that a ring-shaped hole (42) is formed in a surface (25) to be drilled by a drilling tool (22), that outside air is sucked in as a high speed air flow from the lower end of the drilling tool (22) into a chamber (23) thereof through the ring-shaped hole (42) which is being drilled, that the speed of said sucked-in air is quickly slowed down in the chamber (23), and that said air is then discharged outside the chamber (23).

2. A drilling method according to claim 1 characterized in that said drilling tool (22) is sometimes lifted a little during drilling to provide a small clearance between the lower end of said drilling tool (22) and the bottom of said ring-shaped hole (42).

3. A drilling method according to claim 1 characterized in that outside air is caused, during drilling, to enter into the chamber (23) through at least one air passing bore (24) formed at the lower end of said drilling tool (22).

4. A drilling machine comprising a body, a rotation shaft supported freely and rotatably by the body and whose one end extends from the body, a driving source for driving the rotation shaft, a drilling tool provided with an air passage extending in the axial direction thereof and attached to the extending end of the rotation shaft and rotated integrally to the rotation shaft to drill a hole in a surface, and a pumping means for pumping air through the air passage, characterized in that said drilling tool (22) is of cylindrical shape provided with a chamber (23) inside and intended to drill a ring-shaped hole (42), that said pumping means is arranged to suck air from the lower end of said drilling tool (22) into the chamber (23) through the ring-shaped hole (42) and discharge air outside the chamber (23), that said drilling too (22) has a blade which is so shaped as to provide outer and inner clearances in the ring-shaped hole (42) to suck air as a high speed air flow into the chamber (23) through the ring-shaped hole (42), and that the chamber (23) of said drilling tool (22) has a large cross-sectional area relative to that of outer and inner clearances in the ring-shaped hole so as to quickly slow down the air sucked in the chamber (23).

5. A drilling machine according to claim 4 characterized in that said drilling tool (22) has at least one air passing bore (24) formed at the lower end thereof to communicate said outer and inner clearances with each other in the ring-shaped hole.

6. A drilling machine according to claim 5 characterized in that said air passing bore (24) is a notch extending upward from the lower end of said drilling tool (22).

FIG. 1

0075185

F I G. 2

F I G. 3

F I G. 4